Europäisches Patentamt

European Patent Office

Office européen des brevets

Veröffentlichungsnummer: **0 367 754**

**A2**

# EUROPÄISCHE PATENTANMELDUNG

Anmeldenummer: **89890283.8**

Int. Cl.5 **G01L 27/00**

Anmeldetag: **30.10.89**

Priorität: **04.11.88 AT 2715/88**

Veröffentlichungstag der Anmeldung:
**09.05.90 Patentblatt 90/19**

Benannte Vertragsstaaten:
**CH FR GB LI**

Anmelder: **AVL Gesellschaft für Verbrennungskraftmaschinen und Messtechnik mbH LIST, Hans Kleiststrasse 48 A-8020 Graz(AT)**

Erfinder: **Muhrer, Gerhard St. Peter Hauptstrasse 33a A-8042 Graz(AT)**
Erfinder: **Riegebauer, Josef, Dipl.Ing. Loewegasse 7 A-8052 Graz(AT)**

Vertreter: **Pinter, Rudolf Patentanwalt Dipl.-Ing. Rudolf Pinter Elisabethstrasse 1/24 A-1010 Wien(AT)**

Verfahren und Einrichtung zur Bereitstellung eines absolut definierten dynamischen Druckimpulses.

Zur Bereitstellung eines absolut definierten, dynamischen Druckimpulses p(t) wird ein Druckübertragungs-Medium in einer starren Druckkammer (1) mittels eines von außen über ein Fallgewicht (g) betätigten Kolbens (k) dynamisch komprimiert. Aus dem zeitlichen Verlauf der Beschleunigung a(t) des Fallgewichtes (g) während des Zusammenwirkens mit dem Kolben (k) wird unter Berücksichtigung der Masse (m) des Fallgewichts (g) und des Kolbenquerschnitts (A) der Verlauf des absoluten Druckimpulses p(t) nach der Beziehung

$$p(t) = \frac{m \cdot a(t)}{A};$$

ermittelt.

*Fig.1*

## Verfahren und Einrichtung zur Bereitstellung eines absolut definierten dynamischen Druckimpulses

Die Erfindung betrifft ein Verfahren zur Bereitstellung eines absolut definierten dynamischen Druckimpulses von in Grenzen wählbarer Dauer und Amplitude, wobei ein von einer weitgehend starren Druckkammer umschlossenes Druckübertragungs-Medium mittels eines von außen über ein Fallgewicht betätigbaren Kolbens dynamisch komprimiert, und aus einzelnen Messungen am Drucksystem auf den zeitlichen Verlauf des absoluten Druckimpulses geschlossen wird.

Weiters betrifft die Erfindung auch eine Einrichtung zur Bereitstellung eines absolut definierten dynamischen Druckimpulses von in Grenzen wählbarer Dauer und Amplitude, mit einer ein Druckübertragungs-Medium umschließenden, weitgehend starren Druckkammer, welche eine abgedichtete Durchtrittsöffnung für einen von außen über ein Fallgewicht dynamisch betätigbaren Kolben aufweist, sowie mit einer Meßanordnung für einzelne Messungen am Drucksystem und einer angeschlossenen Auswerteeinrichtung.

Verfahren bzw. Einrichtungen zur Bereitstellung von Druckimpulsen sind sowohl für den statischen bzw. hydrostatischen als auch für den dynamischen bzw. hydrodynamischen Fall bekannt, wobei aber zumeist nur im statischen Falle ein mathematisch bzw. absolut beschreibbarer Druck realisiert und bereitgestellt werden kann. Im Falle von dynamischen und hochdynamischen Druckimpulsen, wie sie insbesondere beispielsweise für die Weiterentwicklung oder Kalibrierung von piezoelektrischen Druckaufnehmern, die bei instationär ablaufenden technischen Prozessen verwendet werden, erforderlich sind, zeigen sich bis dato aber immer Schwierigkeiten, mathematisch definierte bzw. absolut beschreibbare Impulse bereitzustellen.

Verfahren bzw. Einrichtungen der eingangs genannten Art sind beispielsweise aus der DE-OS 37 07 565 bekannt und ermöglichen zumindest theoretisch tatsächlich die Bereitstellung eines derartigen absolut definierten dynamischen Druckimpulses. Es wird zu diesem Zweck der zeitliche Verlauf des Druckimpulses bei Beaufschlagung des Druckübertragungs-Mediums über den Kolben und das Fallgewicht erfaßt, wonach aus der vom Kolben übertragenen kinetischen Energie und diesem zeitlichen Verlauf die relevanten Feder- und Dämpfungscharakteristiken des Drucksystems bestimmt werden und daraus auf den Verlauf des absoluten Druckimpulses geschlossen wird. Für die Erfassung des zeitlichen Verlaufes des Druckimpulses ist ein Druckaufnehmer erforderlich, welcher beispielsweise auch unmittelbar von dem absolut zu kalibrierenden gebildet sein kann. Da jedoch nicht ausgeschlossen werden kann, daß bereits der aufgenommene zeitliche Verlauf des Druckimpulses durch diesen Meßwertaufnehmer bzw. dessen dynamische Charakteristik beeinflußt wird, ergibt sich immer eine gewisse Unsicherheit bei diesem bekannten Verfahren, deren Beseitigung die wesentlichste Aufgabe der vorliegenden Erfindung ist.

Ausgehend von Obigem ist also die Aufgabe der vorliegenden Erfindung so zu definieren, daß ein Verfahren sowie eine Einrichtung der eingangs genannten Art so verbessert werden soll, daß die genannten Nachteile nicht auftreten und daß insbesonders auf einfache und von der zumindest vorerst unbekannten dynamischen Charakteristik eines Druckaufnehmers unabhängige Weise ein mathematisch definierbarer, absolut beschreibbarer dynamischer Druckimpuls - an sich für beliebige Verwendung, insbesonders aber zur dynamischen Kalibrierung von Drucksensoren - bereitgestellt werden kann.

Gemäß der vorliegenden Erfindung wird diese Aufgabe bei einem Verfahren der eingangs genannten Art dadurch gelöst, daß der zeitliche Verlauf der Beschleunigung des Fallgewichtes während des Zusammenwirkens mit dem Kolben bestimmt und daraus unter Berücksichtigung der Masse des Fallgewichtes und des Kolbenquerschnitts der Verlauf des absoluten Druckimpulses ermittelt wird.

Die Erfindung geht davon aus, daß der Druckverlauf in einem gasförmigen oder flüssigen Medium, welches in einer geschlossenen Meßkammer mittels eines Kolbens und einer Fallmasse mit Druck beaufschlagt wird, sich als das Produkt der Kompressibilität des Mediums mit dem von der Zeit abhängigen Eindringweg des Kolbens geteilt durch die Querschnittsfläche des Kolbens darstellen läßt. Die praktisch eine Art Federkonstante des Mediums darstellende Kompressibilität ist allerdings unter anderem von der Temperatur abhängig und meßtechnisch nur sehr schwer bestimmbar - entsprechende Tabellenwerte gibt es nur für einzelne reine Medien; insbesonders für Flüssigkeitsgemische zur Anwendung für die Bereitstellung von Hochdruckimpulsen ist es praktisch unmöglich vorweg irgendwelche Werte für diese Kompressibilität zu erhalten.

Die Erfindung geht aber nun weiter davon aus, daß das genannte Produkt dieser Kompressibilität des Mediums mit dem von der Zeit abhängigen Eindringweg des Kolbens während des Zusammenwirkens mit dem Fallgewicht einer Kraft entspricht, die wiederum als Produkt der Masse des Fallgewichts mit der Beschleunigung bzw. Verzögerung des Fallgewichts während der Berührungsphase mit dem Kolben ausgedrückt werden kann.

Daraus ergibt sich also, daß durch Bestimmung der Fallmasse einerseits sowie des zeitlichen Verlaufes der Beschleunigung des Fallgewichtes während des Zusammenwirkens mit dem Kolben andererseits bei Kenntnis des Kolbenquerschnitts eine Absolutbestimmung des dynamischen Druckverlaufes ohne Zuhilfenahme eines Druckaufnehmers durchgeführt werden kann.

Es ist in diesem Zusammenhang anzumerken, daß man zur physikalisch exakten Beschreibung des Drucksystems eigentlich von einem Zwei-Massenschwinger ausgehen müßte, da auch zwischen dem Fallgewicht und dem Kolben gewisse Feder- und Dämpfungswirkungen auftreten, was aber die Auswertung der Messungen und damit die absolute Definition des Druckimpulses sehr erschwert. Es hat sich aber bereits im Zusammenhang mit dem eingangs genannten bekannten Verfahren und auch beim Verfahren gemäß der vorliegenden Erfindung gezeigt, daß mit dem Modell des Ein-Massenschwingers eine sehr hohe Genauigkeit bei der mathematischen Beschreibung der erzeugten dynamischen Druckimpulse erzielt werden kann, soferne nur das Verhältnis der Masse des Fallgewichts zur Masse des Kolbens etwa im Bereich von 100 : 1 und darüber angesetzt werden kann - tatsächlich wird das beschriebene Verfahren nach der vorliegenden Erfindung bei einem Wert des genannten Verhältnisses von etwa 1000 : 1 durchgeführt.

In weiterer Ausgestaltung des erfindungsgemäßen Verfahrens wird der absolute Druckimpuls p(t) nach der Beziehung

$$p(t) = \frac{m \cdot a(t)}{A};$$

mit: m = Masse des Fallgewichtes (g)
a(t) = Verlauf der Beschleunigung des Fallgewichtes (g) beim Zusammenwirken mit dem Kolben (k)
A = Querschnittsfläche des Kolbens (k)
ermittelt, woraus die Einfachheit des erfindungsgemäßen Prinzips hervorgeht.

Die Einrichtung der eingangs genannten Art ist gemäß der Erfindung so ausgebildet, daß die Meßanordnung eine Beschleunigungs-Meßeinheit aufweist, welche vom Verlauf der Beschleunigung des Fallgewichtes während der Zusammenwirkung mit dem Kolben abhängige Meßsignale an die Auswerteeinrichtung abgibt. Diese Beschleunigungs-Meßeinheit kann an sich von beliebiger Bauart und Wirkung sein, solange nur Absolutmessungen des zeitlichen Verlaufes der Beschleunigung möglich sind, was aber beim heutigen diesbezüglichen Stande der Technik keine Probleme bereitet. Soferne die Masse des Fallgewichtes und der relevante Querschnitt des Kolbens nicht bekannt sind, sind natürlich noch entsprechende Meßeinrichtungen für diese Größen vorzusehen, die jedoch unverändert bleiben und daher auch nur einmal bestimmt werden müssen.

Die Beschleunigungs-Meßeinheit kann in weiterer Ausgestaltung der Erfindung einen auf dem Fallgewicht angebrachten Beschleunigungsaufnehmer, vorzugsweise einen Piezo-Aufnehmer, aufweisen. Da derartige Aufnehmer - im Gegensatz zu Druckaufnehmern - auf sogenannten Rütteltischen oder dergleichen Anordnungen auch dynamisch kalibriert werden können, kann damit auf sehr einfache Weise der zeitliche Verlauf der Beschleunigung des Fallgewichtes auch absolut bestimmt werden.

Im Gegensatz zu der damit möglichen direkten Messung der Beschleunigung kann in weiterer Ausgestaltung des erfindungsgemäßen Verfahrens die Beschleunigung auch durch Differenzieren des Geschwindigkeits-Zeitverlaufes des Fallgewichtes bestimmt werden, wobei für die Aufnahme des genannten Geschwindigkeits-Zeitverlaufes selbst an sich jede in diesem Zusammenhang bekannte Methode angewendet werden kann. Insbesonders bevorzugt ist dabei jedoch, daß gemäß einer weiteren Ausgestaltung der Erfindung dieser Geschwindigkeits-Zeitverlauf berührungslos, vorzugs weise unter Ausnutzung des Dopplereffekts mittels Laser-Velocimetrie, ermittelt wird. Laser-Velocimeter sind handelsübliche Einrichtungen, die aus dem ausgesandten und dem vom Prüfobjekt reflektierten Strahl ein Dopplersignal bilden und aus der Dopplerfrequenz auf bekannte Weise eine äußerst genaue Bestimmung der jeweiligen Geschwindigkeit in bzw. gegen Strahlrichtung erlauben.

Die Erfindung wird im folgenden anhand der in der Zeichnung dargestellten Diagramme bzw. Ausführungsbeispiele näher erläutert.

Fig. 1 zeigt eine schematische Seitenansicht einer Einrichtung nach der vorliegenden Erfindung,

Fig. 2 zeigt eine Ansicht der Einrichtung nach Fig. 1 entlang des Pfeiles II in Fig. 1,

Fig. 3 zeigt einen schematischen Schnitt durch die Druckkammer der Einrichtung nach den Fig. 1 und 2 in vergrößertem Maßstab,

Fig. 4 zeigt den zeitlichen Verlauf der am Fallgewicht während des Zusammenwirkens mit dem Kolben beispielsweise bei einer Einrichtung nach den Fig. 1 bis 3 aufgenommenen Beschleunigung a(t) sowie den zugehörigen Verlauf des Druckimpulses p(t) und

Fig. 5 zeigt den beispielsweise mittels Laser-Velocimetrie aufgenommenen Verlauf der Geschwindigkeit v(t) des Fallgewichtes während des Zusammenwirkens mit dem Kolben sowie wiederum den zugehörigen Druckverlauf p(t).

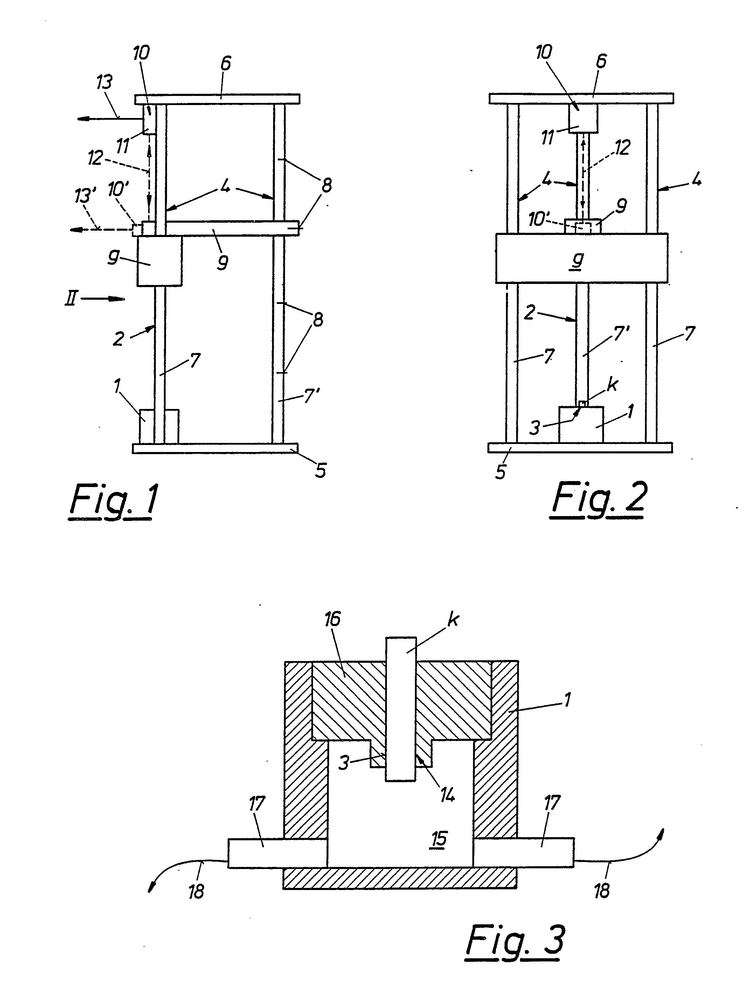

Die Einrichtung nach den Fig. 1 und 2 dient zur Bereitstellung eines absolut definierten dynamischen Druckimpulses von in Grenzen wählbarer Dauer und Amplitude und besteht im wesentlichen aus einer weitgehend starren Druckkammer 1, die ein von der Druckkammer umschlossenes Druckübertragungs-Medium - also ein Gas bzw. Gasgemisch oder eine entsprechende Flüssigkeit - enthält, sowie einer Kompressionseinrichtung 2 zur dynamischen Kompression des Druckübertragungs-Mediums. Die Druckkammer 1 weist eine abgedichtete Durchtrittsöffnung 3 in ihrer Begrenzung auf, in der ein von außen über ein Fallgewicht g dynamisch betätigbarer Kolben k der Kompressionseinrichtung 2 abgedichtet geführt ist. Das Fallgewicht g hat bestimmte bzw. leicht bestimmbare Masse m und ist an einer Führungseinrichtung 4 in der Darstellung senkrecht geführt.

Die Führungseinrichtung 4 der Kompressionseinrichtung 2 umfaßt hier zwei vertikale Säulen bzw. Führungsschienen 7. die ebenso wie die Druckkammer 1 selbst auf einer Grundplatte 5 aufstehen und an ihrem oberen Ende über ein Querhaupt 6 gehalten werden. Weiters ist ein Ständer 7' vorgesehen, der ebenso zwischen der Grundplatte 5 und dem Querhaupt 6 angeordnet ist. Die Führungseinrichtung 4 für das Fallgewicht g kann auf hier nicht weiter dargestellte Weise mit den Führungsschienen 7 bzw. dem Ständer 7' zusammenwirkende, reibungsarme Lager, z.B. selbstzentrierende Luftlager oder dergleichen, zur Reduzierung der Reibung bei der Relativbewegung zwischen Fallgewicht g und Führung aufweisen. Wie aus Fig. 1 ersichtlich, sind an der Führungseinrichtung 4 bzw. am Ständer 7' mittels Rasten 8 definierte Ausgangspositionen für das Fallgewicht g bzw. den Halter 9 vorgegeben, die die Einhaltung von reproduzierbaren Ausgangswerten ermöglichen bzw. erleichtern. Zu diesem Zweck kann weiters auch beispielsweise eine hier nicht dargestellte Halte- und Auslösevorrichtung für das Fallgewicht g an der Führungseinrichtung 4 vorgesehen werden.

Am Querhaupt 6 ist gemäß Fig. 1 und 2 eine Beschleunigungs-Meßeinheit 10 angeordnet, die ein auf das Fallgewicht g ausgerichtetes Laser-Velocimeter 11 aufweist - der Strahlgang ist strichliert eingezeichnet und mit 12 bezeichnet. Diese Beschleunigungs-Meßeinheit ist über eine Leitung 13 mit einer hier nicht dargestellten Auswerteeinrichtung in Verbindung, welche es erlaubt, aus dem Verlauf der Geschwindigkeit und damit der Beschleunigung bzw. Verzögerung des Kolbens k bzw. des Fallgewichts g während der Zusammenwirkung dieser beiden Bauteile auf den Verlauf des absoluten Druckimpulses innerhalb der Druckkammer 1 zu schließen.

Als Alternative zum Laser-Velocimeter 11 ist strichliert in den Fig. 1 und 2 auch noch ein direkt am Fallgewicht g angebrachter Beschleunigungsaufnehmer 10' eingezeichnet, der beispielsweise von einem Piezo-Aufnehmer gebildet sein kann und unmittelbar eine Aufnahme der Beschleunigung bzw. Verzögerung des Fallgewichtes g beim Zusammenwirken mit dem Kolben k ermöglicht - auch die Meßeinheit 10' bzw. der Beschleunigungsaufnehmer ist über eine Leitung 13' mit der nicht dargestellten Auswerteeinrichtung zu verbinden.

Gemäß Fig. 3 ist an der Durchtrittsöffnung 3 für den Kolben k an der Druckkammer 1 eine reibungsarme, druckkompensierte Dichtung 14 vorgesehen, die an der dem Innenraum 15 der Druckkammer 1 zugewandten Seite einen ringförmigen Ansatz konzentrisch zum Kolben k aufweist. Die Dimensionen dieses Ansatzes - also seine Erstreckung in axialer Richtung, sein Innendurchmesser und sein Außendurchmesser - können zusammen mit der Werkstoffwahl des Einsatzes 16 so aufeinander abgestimmt sein, daß der Dichtspalt zum Kolben k im auftretenden Druckbereich zumindest weitgehend konstant bleibt, was dadurch ermöglicht wird, daß der bei höheren Drücken an sich größer werdende Dichtspalt durch die von außen auf den Ansatz wirkenden Radialkräfte zusammengedrückt wird.

An der unteren Seite der Druckkammer 1 sind gemäß Fig. 3 zwei Drucksensoren 17 - beispielsweise piezoelektrische Aufnehmer - eingesetzt und über Leitungen 18 mit zugehörigen, hier nicht dargestellten Meßgeräten verbunden. Diese Drucksensoren 17 können mittels des mit der Einrichtung nach den Fig. 1 bis 3 bereitstellbaren, absolut definierten, dynamischen Druckimpulses dynamisch kalibriert werden. Davon abgesehen kann der mit der dargestellten Einrichtung bereitstellbare dynamische Druckimpuls im Innenraum 15 der Druckkammer 1 auch für beliebige andere Zwecke, für die die genaue Kenntnis aller relevanten Parameter des Druckimpulses erforderlich ist, verwendet werden.

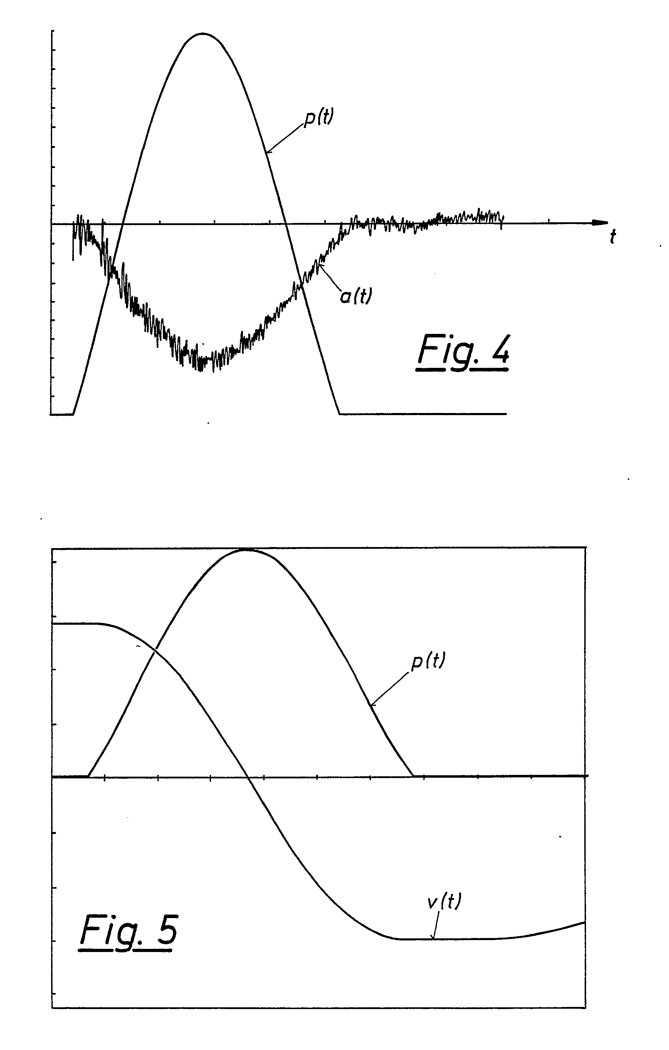

Die in Fig. 4 aufgetragene Beschleunigung a(t) wurde mit einem entsprechend den Fig. 1 und 2 auf dem Fallgewicht g angebrachten Beschleunigungsaufnehmer 10' bestimmt - nach der maximalen Verzögerung wird das Fallgewicht über den Kolben zufolge der elastischen Eigenschaften des Druckübertragungs-Mediums wieder in die entgegengesetzte Richtung beschleunigt, was sich in der Umkehr der a(t)-Kurve äußert. Der stark zackige Verlauf der a(t)-Kurve gemäß Fig. 4 rührt von Vibrationen beim Auftreffen des Fallgewichts g auf dem Kolben k bzw. von kleinen Unzulänglichkeiten in der Auswahl und Anbringung des Beschleunigungsaufnehmers selbst her - diese an sich vermeidbaren Schwankungen sind aber leicht auszufiltern bzw. mathematisch bei der Auswertung zu glätten.

Die ebenfalls in Fig. 4 dargestellte Kurve p(t) ist nach der obenstehend bereits ausführlich besprochenen Beziehung aus der Kurve a(t) und unter Berücksichtigung der Masse m des Fallgewichts 9 sowie der Querschnittsfläche A des Kolbens k ermittelt - man sieht hier sehr schön das Zusammenfallen des Maximums beider Kurven, wobei der Vollständigkeit halber hier erwähnt werden muß, daß die Vorzeichen und die Basislinien beider Kurven nicht übereinstimmen.

In Fig. 5 ist der Verlauf der Geschwindigkeit v-(t) des Fallgewichtes 9 während der Zusammenwirkung mit dem Kolben k aufgetragen, wie er beispielsweise mit dem Laser-Velocimeter 11 gemäß Fig. 1 und 2 ermittelt werden kann. Durch Differenzierung dieser Funktion v(t) erhält man wiederum den Beschleunigungsverlauf a(t) (ähnlich Fig. 4), woraus wiederum unter Ausnutzung der oben beschriebenen Beziehung der Verlauf des absoluten Druckimpulses p(t) - wie in Fig. 5 eingezeichnet - ermittelt werden kann.

Mit der beschriebenen Einrichtung bzw. dem Verfahren nach der vorliegenden Erfindung kann also auf sehr einfache Weise ein absolut definierter dynamischer Druckimpuls bereitgestellt werden, ohne daß ein von vorneherein in seinem dynamischen Verhalten erst einer Kalibrierung bedürftiger Drucksensor zur Aufnahme irgendwelcher Parameter benötigt würde.

Abgesehen von der dargestellten und beschriebenen Ausbildung könnte die konkrete Einrichtung zur Bereitstellung eines derartigen Druckimpulses natürlich auch im Rahmen der dem Fachmann geläufigen Maßnahmen anders aufgebaut sein.

**Ansprüche**

1. Verfahren zur Bereitstellung eines absolut definierten dynamischen Druckimpulses von in Grenzen wählbarer Dauer und Amplitude, wobei ein von einer weitgehend starren Druckkammer umschlossenes Druckübertragungs-Medium mittels eines von außen über ein Fallgewicht betätigbaren Kolbens dynamisch komprimiert, und aus einzelnen Messungen am Drucksystem auf den zeitlichen Verlauf des absoluten Druckimpulses geschlossen wird, **dadurch gekennzeichnet,** daß der zeitliche Verlauf der Beschleunigung (a(t)) des Fallgewichts (g) während des Zusammenwirkens mit dem Kolben (k) bestimmt und daraus unter Berücksichtigung der Masse (m) des Fallgewichts (g) und des Kolbenquerschnitts (A) der Verlauf des absoluten Druckimpulses (p(t)) ermittelt wird.

2. Verfahren nach Anspruch 1, dadurch gekennzeichnet, daß der absolute Druckimpuls (p(t)) nach der Beziehung

$$p(t) = \frac{m \cdot a(t)}{A};$$

mit: m = Masse des Fallgewichtes (g)
a(t) = Verlauf der Beschleunigung des Fallgewichtes(g) beim Zusammen wirken mit dem Kolben (k)
A = Querschnittsfläche des Kolbens (k)
ermittelt wird.

3. Verfahren nach Anspruch 1 oder 2, dadurch gekennzeichnet, daß die Beschleunigung (a(t)) mittels eines auf dem Fallgewicht (g) angebrachten Beschleunigungsaufnehmers bestimmt wird.

4. Verfahren nach Anspruch 1 oder 2, dadurch gekennzeichnet,daß die Beschleunigung (a(t)) durch Differenzieren des Geschwindigkeits-Zeitverlaufes (v(t)) des Fallgewichtes (g) bestimmt wird.

5. Verfahren nach Anspruch 4, dadurch gekennzeichnet, daß der Geschwindigkeits-Zeitverlauf (v(t)) des Fallgewichtes (g) berührungslos, vorzugsweise unter Ausnutzung des Doppler-Effekts mittels Laser-Velocimetrie, ermittelt wird.

6. Einrichtung zur Bereitstellung eines absolut definierten dynamischen Druckimpulses von in Grenzen wählbarer Dauer und Amplitude, mit einer ein Druckübertragungs-Medium umschließenden, weitgehend starren Druckkammer, welche eine abgedichtete Durchtrittsöffnung für einen von außen über ein Fallgewicht dynamisch betätigbaren Kolben aufweist, sowie mit einer Meßanordnung für einzelne Messungen am Drucksystem und einer angeschlossenen Auswerteeinrichtung, **dadurch gekennzeichnet,** daß die Meßanordnung eine Beschleunigungs-Meßeinheit (10, 10') aufweist, welche vom Verlauf der Beschleunigung (a(t)) des Fallgewichtes (g) während der Zusammenwirkung mit dem Kolben (k) abhängige Meßsignale an die Auswerteeinrichtung abgibt.

7. Einrichtung nach Anspruch 6, dadurch gekennzeichnet, daß die Beschleunigungs-Meßeinheit einen auf dem Fallgewicht (g) angebrachten Beschleunigungsaufnehmer (10'), vorzugsweise einen Piezo-Aufnehmer, aufweist.

8. Einrichtung nach Anspruch 6, dadurch gekennzeichnet, daß die Beschleunigungs-Meßeinheit (10) ein auf das Fallgewicht (g) ausgerichtetes Laser-Velocimeter (11) aufweist.

_Fig.1_

_Fig.2_

_Fig.3_

_Fig. 4_

_Fig. 5_